# EUROPEAN PATENT APPLICATION

(11) **EP 4 459 927 A1**
(43) Date of publication of application: **06.11.2024**
(21) Application number: 24172673.6
(22) Date of filing: 26.04.2024
(51) Int. Cl.: H04L 9/40

(54) **DETERMINING SECURITY OF LOCAL AREA NETWORK**

(30) Priority: 02.05.2023 US 202318310720
(71) Applicant: BlackBerry Limited, Waterloo, Ontario N2K 0A7 (CA)
(72) Inventor: BLAIS, Pierre Pierre, Waterloo (CA)
(74) Representative: MERH-IP Matias Erny Reichl Hoffmann Patentanwälte PartG mbB

(57) **Abstract**

Systems, methods, and software can be used to determine whether a local area network (LAN) is secure. In some aspects, a method includes: determining, by an electronic device that is connected to a local area network (LAN), whether the LAN meets a security condition, wherein the determining whether the LAN meets a security condition comprises: determining whether an Internet Protocol (IP) address of a reference server in a security list is included in a range indicated by a subnet mask of the LAN; and determining whether a hostname of a device at the IP address matches a hostname corresponding to the reference server in the security list; and determining whether to initiate a secured network connection based on whether the LAN meets the security condition.

## Description

### TECHNICAL FIELD

The present disclosure relates to determining security of local area network (LAN).

### BACKGROUND

In some implementations, an electronic device is connected to a local area network (LAN), e.g., a wireless LAN or a wired LAN. The LAN further connects to a wide area network and other remote devices, e.g., servers. The electronic device performs network operations, e.g., transmitting and receiving packets to remote devices, by transmitting and receiving these packets through a server, e.g., an access point (AP), on the LAN.

### DESCRIPTION OF DRAWINGS

FIG. 1 is a schematic diagram showing an example system that performs a LAN determination operation, according to an implementation.
FIG. 2 is a flow diagram showing an example process of an operation of LAN determination, according to an implementation.
FIG. 3 illustrates example scenarios of LAN determinations, according to an implementation.
FIG. 4 is a flowchart showing an example method for LAN determination, according to an implementation.
FIG. 5 illustrates a high-level architecture block diagram of a computer according to an implementation.

Like reference numbers and designations in the various drawings indicate like elements.

### DETAILED DESCRIPTION

In some implementations, an electronic device can use secured connection techniques, such as a Virtual Private Network (VPN), to provide security for network operations. In some cases, an enterprise may further require that these techniques be used before the device can access resources of the enterprise network, e.g., transmitting and receiving files between the device and an enterprise server.

On the other hand, it may not be efficient to always require these secured connection techniques to be used. For example, VPN uses VPN Gateway resources and slows down connection performance due to traffic encapsulation. In some scenarios, it may not be necessary to require a VPN connection, for example, if the device is located within the campus of the enterprise and uses a LAN of the enterprise to connect to the network. Since the LAN of the enterprise on campus is within the control of enterprise, it is likely to be secure. Requiring such a device to further use a VPN to connect causes a waste of resources and degradation of performance.

In another example, a user may be concerned about the security of public network when the user's device is using a LAN of a shop or a restaurant for network connection. In these cases, the user may prefer using additional security mechanisms for the network operation. Examples of the security mechanisms including using a VPN, using a secure connection established based on Secure Shell Protocol (SSH), opening a home firewall. On the other hand, the user may consider that the user's home LAN is secure and prefer not to use a connection with these additional security mechanisms when the device is using home LAN.

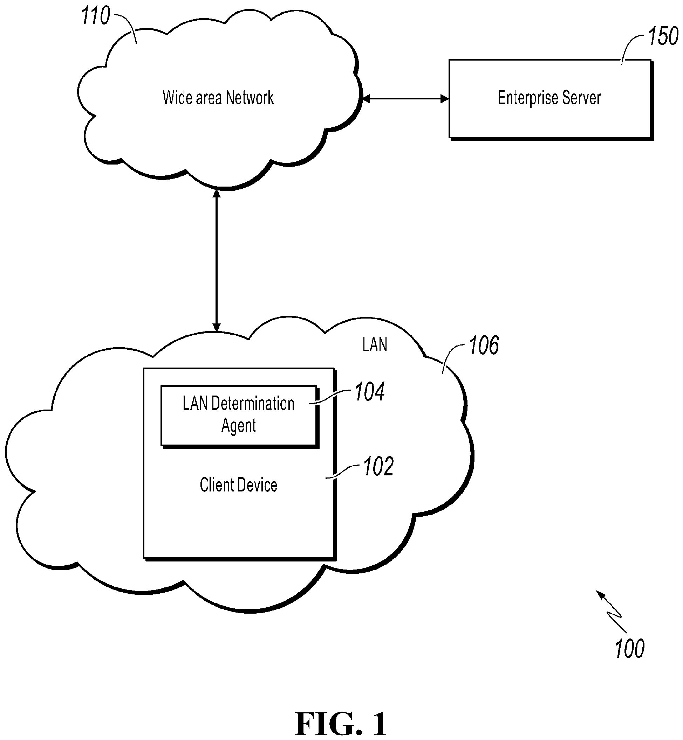

In some operations, the electronic device can determine whether the current LAN meets a pre-configured security condition. The security condition can include verifying that there is a legitimate reference server with an address on the current LAN and a preconfigured hostname. If the current LAN does not meet the security condition, the device automatically uses additional secure network techniques such as VPN to protect the network operation. If the current LAN does meet the security condition, the device proceeds to perform the network operations without these additional secure network techniques. FIGS. 1-5 and associated descriptions provide additional details of these implementations.

Techniques described herein produce one or more technical effects. For example, this approach reduces resource utilization and improves the speed of network performance while providing security to the network operation.

FIG. 1 is a schematic diagram showing an example system 100 that performs an LAN determination operation, according to an implementation. At a high level, the example system 100 includes a client device 102 that is connected to a LAN 106. The LAN 106 further connects to an enterprise server 150 through a wide area network 110.

The client device 102 represents an electronic device that determines whether the LAN 106 is secure. In a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or another mobile communications device having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used synonymously herein.

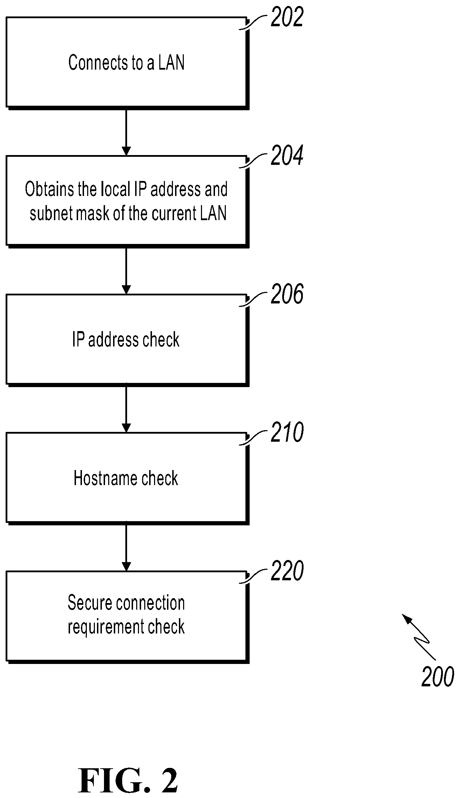

In some implementations, a LAN determination agent (LDA) 104 can be installed and executed on the client device 102. The LDA 104 can represent an application, a set of applications, software, software modules, hardware, or any combination thereof, that can be configured to determine the security condition of a current LAN for the client device 102. For example, the LDA 104 determines whether there is a legitimate reference server with a preconfigured hostname and address connected to the LAN 106. If a legitimate reference server is not found, the LDA 104 automatically uses additional secure network techniques such as VPN to protect the network operation of the client device 102. If a legitimate reference server is found, the LDA 104 instructs the client device 102 to proceed network operation without using VPN 2. FIGS. 2-3 and associated descriptions provide additional details of these implementations.

The enterprise server 150 represents an application, a set of applications, software, software modules, hardware, or any combination thereof that is part of an enterprise network. In some cases, the enterprise can require the client device 102 to use a VPN to connect to the enterprise server 150 if the client device 102 is connected to a LAN that does not meet the security condition. On the other hand, the enterprise can allow the client device 102 not to use a VPN to connect to the enterprise server 150 if the client device 102 is connected to a LAN that meets the security condition. In some cases, the enterprise server 150 may be part of the LAN 106.

The example system 100 includes the LAN 106. The LAN 106 can be a wireless LAN or a wired LAN. The example system 100 also includes the wide area network 110. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

A RAN is part of a wireless telecommunication system that implements a radio access technology, such as UMTS, CDMA2000, 3GPP LTE, 3GPP LTE-A, and 5G. In many applications, a RAN includes at least one base station. A base station may be a radio base station that may control all or at least some radio-related functions in a fixed part of the system. The base station may provide radio interface within their coverage area or a cell for a mobile device to communicate. The base station may be distributed throughout the cellular network to provide a wide area of coverage. The base station directly communicates to one or a plurality of mobile devices, other base stations, and one or more core network nodes.

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flow diagram showing an example process 200 of an operation of LAN determination, according to an implementation. The process 200 can be implemented by one or more entities shown in FIG. 1, or any other systems or modules that provide LAN determination for a device. For example, the process 200 can be implemented by the client device 102. In some cases, the operation performed by the client device 102 discussed in the process 200 can be performed by one or more applications installed on the client device 102, e.g., the LDA 104 discussed previously. The example process 200, shown in FIG. 2, can also be implemented using additional, fewer, or different operations, which can be performed in the order shown or in a different order.

The example process 200 begins at 202, where the client device is connected to a LAN. The LAN that the client device is connected to is referred to as the current LAN. At 204, the client device obtains the local IP address of the client device and subnet mask of the current LAN. In some cases, when the client device is connected to the current LAN, a local IP address is assigned to the client device. The local IP address can be assigned by a router of the LAN. In some cases, the local IP address may be assigned according to the Dynamic Host Configuration Protocol (DHCP) protocol. In some cases, the local IP address may be an IP v4 address or IP v6 address. In one example, the local IP address can be 192.168.5.200.

A subnet mask separates the IP address into the network and host addresses. In one example, the subnet mask is 192.168.5.0/24, which indicates that the first 24 of the 32 bits of the address 192.168.5.0 are used for the network portion, and the last 8 of the 32 bits are used for the host portion. Therefore, the subnet mask indicates that devices connected to the current LAN may have local addresses from 192.168.5.0 to 192.168.5.255. In some cases, the client device receives the subnet mask of the LAN when the client device is connected to the LAN.

At 206, the client device determines whether the address range indicated by the subnet mask includes an IP address of a pre-configured reference server in a security list. The security list includes information of one or more pre-configured reference servers. These reference servers represent host devices that meet security conditions. The information of the reference servers includes an IP address of the reference server and a hostname of the reference server. The information can be included in a tuple. In one example, an organization (e.g., a business enterprise, a school, a government entity, or etc.) may determine that LANs within its campus are secure. The reference servers in the LANs within the campus of the organization may be assigned with a preconfigured address and a preconfigured hostname. For example, the reference server may be configured with IP address 192.168.5.5 with a hostname ENTERPRISESERVER. The IP address 192.168.5.5 is thus included in the security list together with the hostname ENTERPRISESERVER. The security list may include information (preconfigured IP addresses and hostnames) for other reference servers. The security list is stored on the client device. For example, the security list can be sent to the client device during a provisioning process.

In some cases, the client device can store multiple security lists. For example, the client device can store an enterprise security list. The enterprise security list may be used to determine whether the current LAN is one of LANs that have meet security requirements for an enterprise. In these cases, the information of the reference servers can be set by the administrator of the enterprise. Alternatively, or in addition, the client device can store a private security list. The private security list may be used to determine whether the current LAN is a home LAN that meets security requirements for a user of the client device. In this case, the user can include the address and hostname configured in the router of the LAN in the user's home as the information of the reference server in the private security list. In some cases, these security lists can be combined. For example, the security list can include an enterprise portion that includes the enterprise reference servers and a private portion that includes the home reference servers.

As discussed previously, the subnet mask of the current LAN indicates a range of IP addresses of devices that may be connected to the current LAN. The client device can thus search the IP addresses of the reference servers in the security list and determine whether at least one of the IP addresses of the reference servers is included in this range. For example, if the security list includes an address 192.168.5.5 for a reference server, and the subnet mask is 192.168.5.0/24, which indicates a range of 192.168.5.0 to 192.168.5.255, then the client device can determine that the current LAN may potentially include the reference server with the address 192.168.5.5 in the security list. On the other hand, for a reference server with address 10.10.1.1 in the security list, the client device can determine that this address is not within the range of 192.168.5.0 to 192.168.5.255 as indicated by the subnet mask and thus, this reference server is not present on the current LAN. In another example, if the subnet mask is 192.168.5.64/26 (meaning that a host should be located in the range of 192.168.54.64 to 192.168.5.126 (the address 192.168.5.127 being used as a broadcast address)), then for a reference server with address 192.168.54.5 in the security list, the client device can determine that this address is not present in the current LAN.

If the client device determines that none of the preconfigured reference servers in the security list is included in the range defined by the subnet mask, then the client device can determine that the current LAN does not meet the security condition and terminate the process 200.

If the client device determines that addresses of one or more reference servers in the security list are included in the range indicated by the subnet mask, the client device proceeds to 210. At 210, the client device determines whether these one-reference servers have a hostname that matches the corresponding hostname in the security list. In some implementations, the client device can perform a reverse Domain Name System (DNS) lookup procedure to discover the hostname associated with addresses found at step 206 discussed previously. In the example discussed previously, the client device determines that the address 192.168.5.5 in the security list is included in the range indicated by the subnet mask of the current LAN. In this case, the client device can proceed to perform a reverse DNS lookup to find the hostname of the device with IP address of the 192.168.5.5. For example, the client device can send a query to a DNS server. The query can include the address 192.168.5.5. In response to the query, the client device can receive a response from the DNS server. The response can indicate that ENTERPRISESERVER is the hostname of the device at 192.168.5.5. The client device can check the security list and determine that the address 192.168.5.5 corresponds to the same name (ENTERPRISESERVER). Therefore, the client device can determine that both the hostname and the address match the reference servers in the security list. In this case, the device at the address may be a potential reference server configured in the security list. On the other hand, if the client device receives a response from the DNS indicating that the hostname of the device at 192.168.5.5 at current LAN is LOCALSEVER, which is different from the corresponding hostname in the security list, the client device can determine that the device at the address 192.168.5.5 is not a potential reference server in the security list. In some cases, the client device can repeat this procedure for each address found at step 206.

If the client device determines that none of the addresses found at step 206 have a hostname that matches the corresponding hostname in the security list, then the client device can determine that the current LAN does not meet the security condition and terminate the process 200.

If the client device determines that there is at least one potential reference server in the current LAN, i.e., both the addresses and hostname of the potential reference server match one of the reference servers in the list, the client device proceeds to 220.

At 220, the client device verifies whether the potential reference server meets a secure connection requirement. The secure connection requirement can be configured by the administrator of the enterprise for enterprise operation, the user of the client device for private operation, or both. In one example, the secure connection requirement can include determining whether the potential reference server is present at the address found at step 206 by sending a ping and determining whether a response is received within a configured duration. Alternatively, or additionally, the secure connection requirement can include requirements for the potential reference server to support one or more secured communication protocols, such as Hypertext Transfer Protocol Secure (HTTPS) or Transport Layer Security (TLS). In one example, the client device can send a connection request to the address of the potential reference server. The connection request can be an HTTPS message or TLS message. The client device can determine whether a response is received from the potential reference server and whether a secure connection according to the secured protocols is established. This procedure can confirm whether there is a potential reference server present at the address found at step 206, and whether this potential reference server supports the secured connection. In some cases, the types of secured communication protocols that meet the secure connection requirement can also be included in the security list. The types of secured communication protocols can be same for the reference servers in the security list. Alternatively, or in addition, the security list can include different secured communication protocols that correspond to different reference servers in the security list.

In some cases, the secure connection requirement can include a list of configured credentials corresponding to the reference servers. These credentials can include identity information, certificates, public keys, security tokens, or other credentials. The client device can receive certificates, encrypted identity, signed tokens or other information, and use the configured credentials to determine whether the received information is validated. In some implementations, the security list can include configured credentials that correspond to each reference sever in the security list.

If the client device determines that none of the potential reference servers found at step 210 support the security connection requirements discussed previously, then the client device can determine that the current LAN does not meet the security condition and terminate the process 200.

If the client device determines that there is a potential reference server that supports the security connection requirements, the client device can determine that the current LAN meets the security condition and terminate the process 200.

If the client device determines that the current LAN does not meet the security condition, the client device can determine that a secure network connection is required. For example, the client device can initiate a VPN connection, and perform network connections through the VPN connection. Alternatively, or additionally, the client device can open a firewall and establish connection through the firewall, use SSH or other security mechanisms to establish the secure network connection to protect the network traffic.

On the other hand, if the client device determines that the current LAN meets the security condition, the client device can determine that a secure network connection is not required. In this case, the client device can perform network connections using the current LAN without additional network security mechanisms such as VPN, firewall, or SSH.

In some cases, the client device can further prompt the user for input of whether a secure connection is needed when the current LAN meets the security condition in case additional security is preferred.

In some cases, the client device can output an indication, e.g., display a message, display or change an icon, output an audio sound, or any combinations thereof. The indication can indicate whether the current LAN meets the security condition. The indication can further indicate the particular reason that the current LAN fails to pass the security check, for example, if the address check (step 206) and the reverse DNS check (210) are both successful, and a potential reference server is present, yet the potential reference server fails to pass the security credential check. This may indicate a presence of a malicious server that imitates a legitimate reference server on the current LAN. The client address may output the indication on the device or send to a server for further actions.

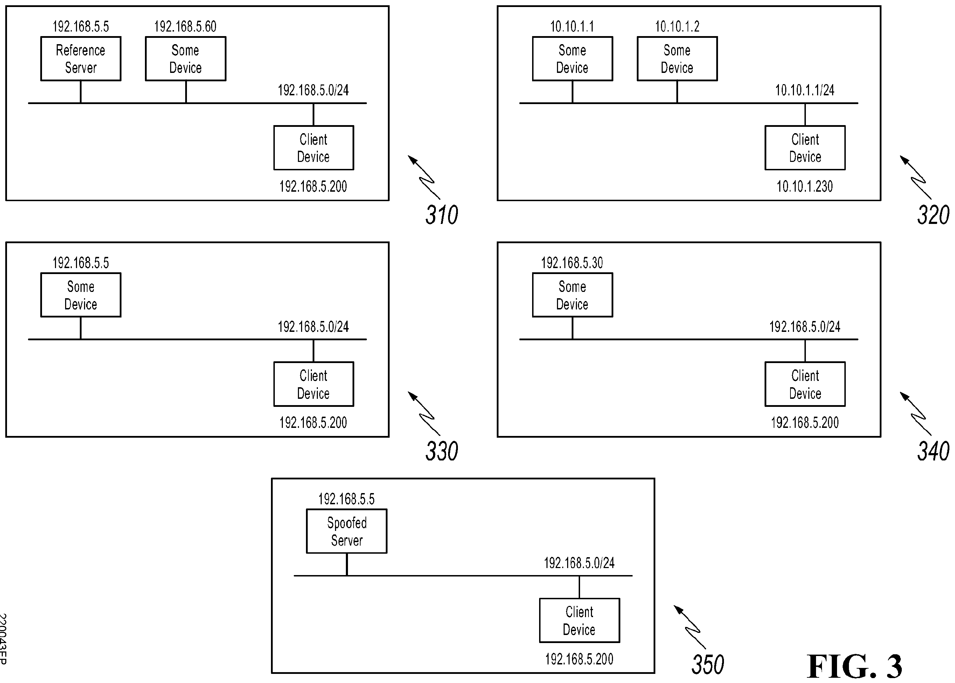

FIG. 3 illustrates example scenarios of LAN determinations, according to an implementation.

In scenario 310, the client device is connected to the current LAN. The client device obtains the subnet mask 192.168.5.0/24, and the assigned address of 192.168.5.200. There are other devices on the current LAN, e.g., at address 192.168.5.60. The security list includes a reference sever with an IP address 192.168.5.5. Based on the subnet mask 192.168.5.0/24, the client device determines that this IP address 192.168.5.5 is included in the range of hosts indicated by the current LAN's subnet mask (from 192.168.5.0 to 192.168.5.255). The client device further performs a reverse DNS lookup to find the hostname of the device at 192.168.5.5. The hostname matches the corresponding hostname for the reference server in the security list, e.g., the hostname in the same tuple as the address 192.168.5.5. The client device further uses a secure connection protocol (e.g., HTTPS or TLS) to establish a connection to the device at 192.168.5.5. The client device verifies the credential of the device at 192.168.5.5 and confirms that the device is a valid reference server. The client device determines that the current LAN meets the security condition. It can release the secure connection and proceed to perform network operations using the current LAN without additional security mechanisms.

In scenario 320, the client device is connected to the current LAN. The client device obtains the subnet mask 10.10.1.0/24, and the assigned address of 10.10.1.230. There are other devices on the current LAN, e.g., at address 10.10.1.2. The security list includes a reference sever with an IP address 192.168.5.5. Based on the subnet mask 10.10.1.0/24, the client device determines that this IP address 192.168.5.5 is not included in the range of hosts indicated by the subnet mask (from 10.10.1.0 to 10.10.1.255). The client device determines that the current LAN does not meet the security condition. It initiates a secure connection with additional security mechanisms (e.g., VPN, SSH, firewall) and performs network operations through the secure connection.

In scenario 330, the client device is connected to the current LAN. The client device obtains the subnet mask 192.168.5.0/24, and the assigned address of 192.168.5.200. The client device determines that IP address 192.168.5.5 is included in the range of hosts indicated by the subnet mask (from 192.168.5.0 to 192.168.5.255). The client device further performs a reverse DNS lookup to find the hostname of the device at 192.168.5.5. In this scenario, the hostname does not match the corresponding hostname for the address 192.168.5.5 in the same tuple in the security list. The client device determines that the current LAN does not meet the security condition. It initiates a secure connection and performs network operations through the secure condition.

In scenario 340, the client device is connected to the current LAN. The client device obtains the subnet mask 192.168.5.0/24, and the assigned address of 192.168.5.200. There are devices on the current LAN, e.g., at address 192.168.5.30. The security list includes a reference sever with an IP address 192.168.5.5. Based on the subnet mask 192.168.5.0/24, the client device determines that this IP address 192.168.5.5 is included in the range of hosts indicated by the subnet mask (from 192.168.5.0 to 192.168.5.255). The client device further performs a reverse DNS lookup to find the hostname of the device at 192.168.5.5. The reverse DNS check is unsuccessful because there is no device at that address on the current LAN. The client device determines that the current LAN does not meet the security condition. It initiates a secure connection and performs network operations through the secure condition. In some cases, the reverse DNS check is successful, but the reference server at the IP address 192.168.5.5 may be unreachable (e.g., offline due to maintenance). In that case, the client device can search another IP address in the security list that is within the range of hosts indicated by the subnet mask (from 192.168.5.0 to 192.168.5.255). In one example, an IP address 192.168.5.100 may also be found in the security list. The client device can perform a reverse DNS lookup to find the hostname of the device at 192.168.5.100. The client device can determine whether the hostname matches the hostname in the security list that corresponds to determine the IP address 192.168.5.100. This enables the enterprise or home user to configure a redundant reference server in the LAN.

In scenario 350, the client device is connected to the current LAN. The client device obtains the subnet mask 192.168.5.0/24, and the assigned address of 192.168.5.200. The security list includes a reference sever with an IP address 192.168.5.5. Based on the subnet mask 192.168.5.0/24, the client device determines that this IP address 192.168.5.5 is included in the range of hosts indicated by the subnet mask (from 192.168.5.0 to 192.168.5.255). The client device further performs a reverse DNS lookup to find the hostname of the device at 192.168.5.5. The hostname matches the corresponding hostname for the reference server in the security list, e.g., the hostname in the same tuple as the address 192.168.5.5. Note that in this scenario, a malicious operator installed a spoofed server on the current LAN with the hostname and address that is the same as the hostname and address for a legitimate reference server in the security list. Therefore, both the address check and the reverse DNS lookup are successful.

The client device further uses a secure connection protocol (e.g., HTTPS or TLS) to establish a connection to the device at 192.168.5.5. The client device verifies the credential of the device at 192.168.5.5. The spoofed server fails to pass these security requirements check because the spoofed server does not have the security credentials that are needed to complete these procedures. The client device determines that the current LAN does not meet the security condition. It initiates a secure connection and performs network operations through the secure condition. The client device can further generate an audio or visual alarm, send an alert notification to a server, or both.

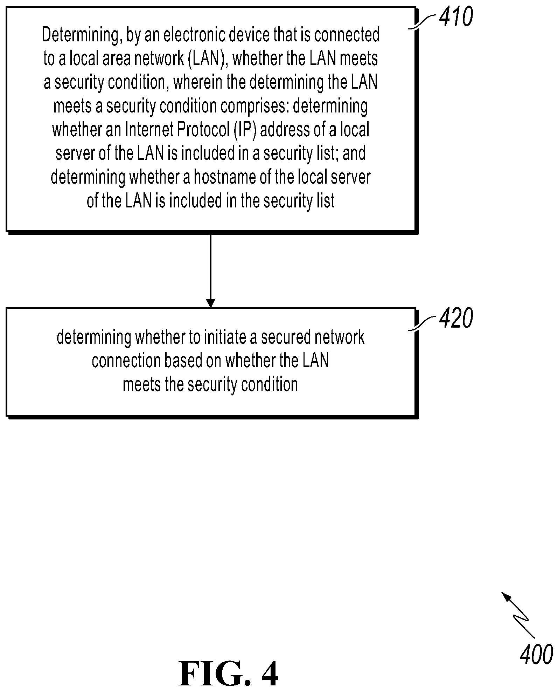

FIG. 4 is a flowchart showing an example method 400 for LAN determination, according to an implementation. The example method 400 can be implemented by a client device, e.g., the client device 102 shown in FIG. 1. The example method 400 shown in FIG. 4 can be implemented using additional, fewer, or different operations, which can be performed in the order shown or in a different order.

At step 410, an electronic device that is connected to a local area network (LAN) determines whether the LAN meets a security condition, wherein the determining that the LAN meets a security condition comprises: determining whether an Internet Protocol (IP) address of a reference server in a security list is included in a range indicated by a subnet mask of the LAN, and determining whether a hostname of a device at the IP address matches a hostname corresponding to the reference server in the security list.

At step 420, the electronic device determines whether to initiate a secured network connection based on whether the LAN meets the security condition.

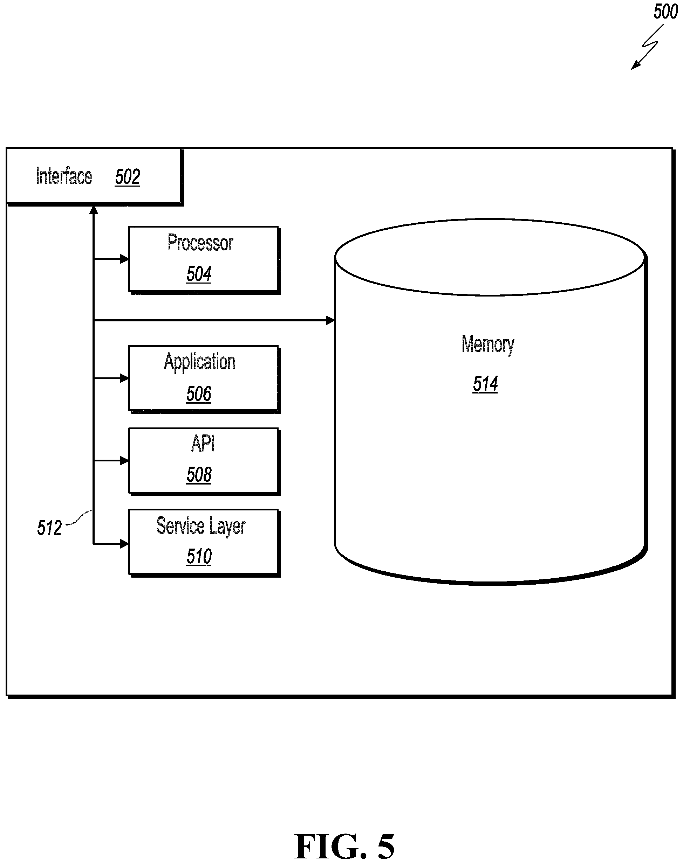

FIG. 5 illustrates a high-level architecture block diagram of a computer 500 according to an implementation. The computer 500 can be implemented as the client device 102 in FIG. 1. The computer 500 can also be used to implement the operations discussed in FIGS. 1-4. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the processing algorithm of the code package establishment can be implemented in an executable computing code, e.g., C/C++ executable codes. In some cases, the computer 500 can include a standalone Linux system that runs batch applications. In some cases, the computer 500 can include mobile or personal computers.

The computer 500 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 500 can serve as a client, network component, a server, a database or other persistency, and/or any other components. In some implementations, one or more components of the computer 500 may be configured to operate within a cloud-computing-based environment.

At a high level, the computer 500 is an electronic computing device operable to receive, transmit, process, store, or manage data. According to some implementations, the computer 500 can also include or be communicably coupled with an application server, e-mail server, web server, caching server, streaming data server, business intelligence (BI) server, and/or other server.

The computer 500 can collect data of network events or mobile application usage events over network 110 from a web browser or a client application, e.g., an installed plugin. In addition, data can be collected by the computer 500 from internal users (e.g., from a command console or by another appropriate access method), external or third parties, other automated applications, as well as any other appropriate entities, individuals, systems, or computers.

Each of the components of the computer 500 can communicate using a system bus 512. In some implementations, any and/or all the components of the computer 500, both hardware and/or software, may interface with each other and/or the interface 502 over the system bus 512 using an API 508 and/or a service layer 510. The API 508 may include specifications for routines, data structures, and object classes. The API 508 may be either computer language-independent or - dependent and refer to a complete interface, a single function, or even a set of APIs. The service layer 510 provides software services to the computer 500. The functionality of the computer 500 may be accessible for all service consumers using this service layer. Software services, such as those provided by the service layer 510, provide reusable, defined business functionalities through a defined interface. For example, the interface may be software written in JAVA, C++, or other suitable languages providing data in Extensible Markup Language (XML) format or other suitable format. While illustrated as an integrated component of the computer 500, alternative implementations may illustrate the API 508 and/or the service layer 510 as stand-alone components in relation to other components of the computer 500. Moreover, any or all parts of the API 508 and/or the service layer 510 may be implemented as child or sub-modules of another software module, enterprise application, or hardware module without departing from the scope of this disclosure.

The computer 500 includes an interface 502. Although illustrated as a single interface 502 in FIG. 5, two or more interfaces 502 may be used according to particular needs, desires, or particular implementations of the computer 500. The interface 502 is used by the computer 500 for communicating with other systems in a distributed environment connected to a network (whether illustrated or not). Generally, the interface 502 comprises logic encoded in software and/or hardware in a suitable combination and operable to communicate with the network. More specifically, the interface 502 may comprise software supporting one or more communication protocols associated with communications such that the network or interface's hardware is operable to communicate physical signals within and outside of the computer 500.

The computer 500 includes at least one processor 504. Although illustrated as a single processor 504 in FIG. 5, two or more processors may be used according to particular needs, desires, or particular implementations of the computer. Generally, the processor 504 executes instructions and manipulates data to perform the operations of the computer 500. Specifically, the processor 504 executes the functionality disclosed in FIGS. 1-4.

The computer 500 also includes a memory 514 that holds data for the computer 500. Although illustrated as a single memory 514 in FIG. 5, two or more memories may be used according to particular needs, desires, or particular implementations of the computer 500. While memory 514 is illustrated as an integral component of the computer 500, in alternative implementations, memory 514 can be external to the computer 500.

The application 506 is an algorithmic software engine providing functionality according to particular needs, desires, or particular implementations of the computer 500, particularly with respect to functionality required for anomaly detection. Although illustrated as a single application 506, the application 506 may be implemented as multiple applications 506 on the computer 500. In addition, although illustrated as integral to the computer 500, in alternative implementations, the application 506 can be external to the computer 500.

There may be any number of computers 500 associated with, or external to, and communicating over a network. Furthermore, this disclosure contemplates that many users may use one computer 500, or that one user may use multiple computers 500.

Described implementations of the subject matter can include one or more features, alone or in combination.

For example, in a first implementation, a method, comprising: determining, by an electronic device that is connected to a local area network (LAN), whether the LAN meets a security condition, wherein the determining whether the LAN meets a security condition comprises: determining whether an Internet Protocol (IP) address of a reference server in a security list is included in a range indicated by a subnet mask of the LAN; and determining whether a hostname of a device at the IP address matches a hostname corresponding to the reference server in the security list; and determining whether to initiate a secured network connection based on whether the LAN meets the security condition.

The foregoing and other described implementations can each, optionally, include one or more of the following features:

A first feature, combinable with any of the following features, wherein the determining whether the LAN meets a security condition further comprises: transmitting a connection request to the device at the IP address; receiving authentication information from the device; and determining that the LAN meets the security condition based on the authentication information.

A second feature, combinable with any of the previous or following features, wherein the connection request is transmitted using a secure network protocol that is configured in the security list.

A third feature, combinable with any of the previous or following features, wherein the hostname is determined by using a reverse Domain Name System (DNS) lookup procedure.

A fourth feature, combinable with any of the previous or following features, wherein the method further comprises: in response to determining that the LAN does not meet the security condition: initiating a Virtual Private Network (VPN) connection; and transmitting packets to a remote server using the VPN connection.

A fifth feature, combinable with any of the previous or following features, wherein the method further comprises: in response to determining that the LAN meets the security condition: transmitting packets to a remote server without using a Virtual Private Network (VPN) connection.

A sixth feature, combinable with any of the previous features, wherein the security list includes information of an enterprise server and a home server.

In a second implementation, , one or more computer-readable media containing instructions which, when executed, cause an electronic device to perform operations comprising: determining, by an electronic device that is connected to a local area network (LAN), whether the LAN meets a security condition, wherein the determining whether the LAN meets a security condition comprises: determining whether an Internet Protocol (IP) address of a reference server in a security list is included in a range indicated by a subnet mask of the LAN; and determining whether a hostname of a device at the IP address matches a hostname corresponding to the reference server in the security list; and determining whether to initiate a secured network connection based on whether the LAN meets the security condition.

The foregoing and other described implementations can each, optionally, include one or more of the following features:

A first feature, combinable with any of the following features, wherein the determining whether the LAN meets a security condition further comprises: transmitting a connection request to the device at the IP address; receiving authentication information from the device; and determining that the LAN meets the security condition based on the authentication information.

A second feature, combinable with any of the previous or following features, wherein the connection request is transmitted using a secure network protocol that is configured in the security list.

A third feature, combinable with any of the previous or following features, wherein the hostname is determined by using a reverse Domain Name System (DNS) lookup procedure.

A fourth feature, combinable with any of the previous or following features, wherein the operations further comprise: in response to determining that the LAN does not meet the security condition: initiating a Virtual Private Network (VPN) connection; and transmitting packets to a remote server using the VPN connection.

A fifth feature, combinable with any of the previous or following features, wherein the operations further comprise: in response to determining that the LAN meets the security condition: transmitting packets to a remote server without using a Virtual Private Network (VPN) connection.

A sixth feature, combinable with any of the previous features, wherein the security list includes information of an enterprise server and a home server.

In a third implementation, an electronic device comprises: one or more processors; and one or more computer memory devices interoperably coupled with the one or more processors and having tangible, non-transitory, machine-readable media storing one or more instructions that, when executed by the one or more processors, cause the electronic device to perform operations comprising: determining, by the electronic device that is connected to a local area network (LAN), whether the LAN meets a security condition, wherein the determining whether the LAN meets a security condition comprises: determining whether an Internet Protocol (IP) address of a reference server in a security list is included in a range indicated by a subnet mask of the LAN; and determining whether a hostname of a device at the IP address matches a hostname corresponding to the reference server in the security list; and determining whether to initiate a secured network connection based on whether the LAN meets the security condition.

The foregoing and other described implementations can each, optionally, include one or more of the following features:

A first feature, combinable with any of the following features, wherein the determining whether the LAN meets a security condition further comprises: transmitting a connection request to the device at the IP address; receiving authentication information from the device; and determining that the LAN meets the security condition based on the authentication information.

A second feature, combinable with any of the previous or following features, wherein the connection request is transmitted using a secure network protocol that is configured in the security list.

A third feature, combinable with any of the previous or following features, wherein the hostname is determined by using a reverse Domain Name System (DNS) lookup procedure.

A fourth feature, combinable with any of the previous or following features, wherein the operations further comprise: in response to determining that the LAN does not meet the security condition: initiating a Virtual Private Network (VPN) connection; and transmitting packets to a remote server using the VPN connection.

A fifth feature, combinable with any of the previous or following features, wherein the operations further comprise: in response to determining that the LAN meets the security condition: transmitting packets to a remote server without using a Virtual Private Network (VPN) connection.

A sixth feature, combinable with any of the previous features, wherein the security list includes information of an enterprise server and a home server.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatus with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

The processes and logic flows described in this specification can be performed by one or more programmable computers, executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a ROM or a RAM or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a PDA, a mobile audio or video player, a game console, a GPS receiver, or a portable storage device, e.g., a USB flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD, LED, or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., such as a data server, or that includes a middleware component, e.g., an application server, or that includes a front-end component, e.g., a client computer having a graphical user interface or a Web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a WLAN using, for example, 802.11 a/b/g/n and/or 802.20, all or a portion of the Internet, and/or any other communication system or systems at one or more Locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship with each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and parallel processing may be advantageous.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Accordingly, the above description of example implementations does not define or constrain this disclosure. Other changes, substitutions, and alterations are also possible without departing from the spirit and scope of this disclosure.

## Claims

1. A method, comprising:
determining, by an electronic device that is connected to a local area network (LAN), whether the LAN meets a security condition, wherein the determining whether the LAN meets a security condition comprises:
determining (206) whether an Internet Protocol (IP) address of a reference server in a security list is included in a range indicated by a subnet mask of the LAN; and
determining (210) whether a hostname of a device at the IP address matches a hostname corresponding to the reference server in the security list; and
determining (420) whether to initiate a secured network connection based on whether the LAN meets the security condition.

2. The method of claim 1, wherein the determining whether the LAN meets a security condition further comprises:
transmitting a connection request to the device at the IP address;
receiving authentication information from the device; and
determining that the LAN meets the security condition based on the authentication information.

3. The method of claim 2, wherein the connection request is transmitted using a secure network protocol that is configured in the security list.

4. The method of any previous claim, wherein the hostname is determined by using a reverse Domain Name System (DNS) lookup procedure.

5. The method of any previous claim, further comprising:
in response to determining that the LAN does not meet the security condition:
initiating a Virtual Private Network (VPN) connection; and
transmitting packets to a remote server using the VPN connection.

6. The method of any previous claim, further comprising:
in response to determining that the LAN meets the security condition: transmitting packets to a remote server without using a Virtual Private Network (VPN) connection.

7. The method of any previous claim, wherein the security list includes information of an enterprise server and a home server.

8. One or more computer-readable media containing instructions which, when executed, cause a computing device to perform operations as recited in any of claims 1 to 7.

9. An electronic device (500), comprising:
one or more computers; and
one or more computer memory devices (514) interoperably coupled with the one or more computers and having tangible, non-transitory, machine-readable media storing one or more instructions that, when executed by the one or more computers, perform one or more operations as recited in any of claims 1 to 7.
